# EUROPEAN PATENT APPLICATION

(11) **EP 3 637 698 A1**
(43) Date of publication of application: **15.04.2020**
(21) Application number: 18805634.5
(22) Date of filing: 18.05.2018
(51) Int. Cl.: H04L 12/741

(54) **PACKET FORWARDING METHOD, DEVICE AND APPARATUS, AND STORAGE MEDIUM**

(30) Priority: 23.05.2017 CN 201710372254
(71) Applicant: ZTE Corporation, Shenzhen, Guangdong 518057 (CN)
(72) Inventor: ZHANG, Zheng, Shenzhen Guangdong 518057 (CN); WU, Bo, Shenzhen Guangdong 518057 (CN)
(74) Representative: Rosenberg, Muriel Sylvie
(86) International application number: PCT/CN2018/087469
(87) International publication number: WO 2018/214817

(57) **Abstract**

Provided in embodiments of the present disclosure are a packet forwarding method, device and apparatus, and a storage medium. The method includes: receiving a bit indexed explicit replication (BIER) packet sent by a source apparatus; and forwarding the BIER packet to a destination apparatus according to a set identifier (SI) carried by a packet header of the BIER packet, wherein the set identifier (SI) indicates a cluster in which the destination apparatus resides.

## Description

### CROSS-REFERENCE TO RELATED APPLICATION

This application is based on and claims priority from Chinese Patent Application No. 201710372254.X filed on May 23, 2017, the disclosure of which is herein incorporated by reference in its entirety.

### TECHNICAL FIELD

The present disclosure relates to the field of communication, specifically, relates to an information forwarding method, device and apparatus and a storage medium.

### BACKGROUND

Data center is a world cooperation specific apparatus network, and is used for transferring, accelerating, displaying, computing, storing data information on the Internet network infrastructure. As to the data center, it is defined by relevant websites as "data center is a complex set of facilities, which includes not only computer systems and corresponding other apparatuses (for example, communication and storage systems) but also redundant data communication connections, environmental control apparatuses, monitoring apparatuses, and various safety devices". In a released book "The Datacenter as a Computer", the data center is explained as "a functional structure, which can contain a plurality of servers and communication apparatuses, these apparatuses are disposed together because they have same environmental requirements and physical security demands and are easy to maintain" rather than "merely a set of servers".

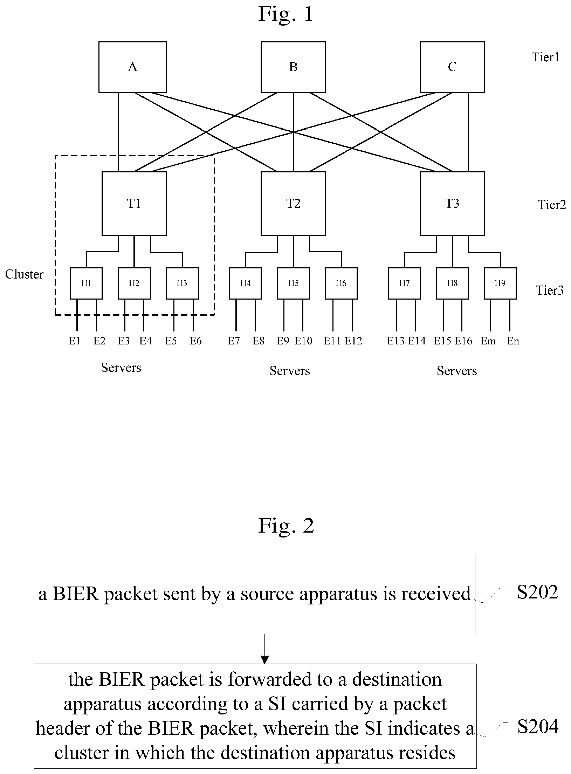

The main purpose of a data center is to run applications for processing data of business and operational organizations. A development trend of an enterprise data center is processing high flexibility and adaptability, for example, rapidly changing according to external demand. With regard to methods for implementing the techniques, virtualization technology and creation of a modularity data center both are good solutions. As rapid development of the data center, traffic in the data center accounts for a considerable proportion of the whole network, for example, the data center has requirements for backup and content synchronization, etc. This poses new challenges to a network deployment of the data center. Using only two-tier interconnection technology in the past no longer meet the needs of the data center. Therefore, the present data center already has a three-tier or three-tier plus two-tier network. Because of cost, data center network architectures are rarely fully interconnected, but connected in a multilevel architecture Clos mode. As shown in Fig. 1, the most common networking mode is shown. In such mode, apparatuses are divided into three tiers, the innermost tier is defined as Tier1, the other two are defined as Tier2 and Tier3 in sequence. A group of apparatuses having a same or similar functions or a same geographical location is managed by a same management apparatus. The management apparatus may be a ToR (Top of Rack) apparatus or a router gateway apparatus. The group of apparatuses and the management apparatus thereof are collectively referred to as a Cluster. Below the Tier3 apparatuses, various VMs (Virtual Machines) are connected, which are shown as En in Fig. 1. In Fig. 1, for simplicity, only 2 VMs are exemplified below a Tier3 apparatus, however, in reality, the number of VMs below the Tier3 apparatus may reach several tens. The Tier3 apparatus is a Hypervisor, and it may also be a virtual program or a physical apparatus. Assume that the Tier3 apparatus is represented by number Hn, a Tier2 apparatus is represented by number Tn. In general, when a packet sent by a VM arrived a Tier3 apparatus, the packet is encapsulated in a form of Virtual eXtensible Local Area Network (VXLAN), Generic Network Virtualization Encapsulation (GENEVE), Network Virtualization Using Generic Routing Encapsulation (NVGRE), or Generic UDP Encapsulation (GUE), etc., and interacted through a data center core network after a virtual network identity is encapsulated.

In a tiered interconnected network architecture, in addition to point-to-point data center content synchronization or backup, there are demands of lots of Broadcast, Unknown unicast, Multicast (referred to as BUM). In the three-tier or three-tier plus two-tier implementation, there is a problem to be solved that how the BUM traffic interact in a data center network. In order to meet the demands of the BUM, Protocol Independent Multicast (PIM) multicast technique is introduced into the data center internal networking. As deployment and data center services become more complex, the PIM multicast technique has encountered may problems. For example, the VM apparatuses E1, E8, E10, E14, and E16 in Fig. 1 belongs to a same virtual network (a virtual network may be represented by a VNI (Virtual Network Identifier)), assuming the VNI is 1, the BUM traffics need to be interflowed in this virtual network. There is a solution of building a fully interconnected multicast tree for each VNI, that is, by using each of the Tier3 nodes as a root, building a multicast tree to other Tier3 nodes. In the implementation, H1 is used as a root firstly, and is allocated a multicast address G1, a multicast tree is built hop-by-hop from H1 to leaf nodes H4, H5, H7, and H8 by PIM signaling. Secondly, H4 is used as a root, and is allocated a multicast address G2, a multicast tree is built hop-by-hop from H4 to leaf nodes H1, H5, H7, and H8 by PIM signaling. Repeat the same process for each of H5, H7, and H8, allocate multicast address, and build a multicast tree hop-by-hop by PIM protocol. Assuming the allocated multicast addresses are G1 to G5, thus after the BUM traffics of the VMs are encapsulated through the Tier3 apparatuses, they can reach the destination Tier3 apparatus through a proper multicast tree, and go forward to a proper VM by the Tier3 apparatus according to the virtual network identity of the packet.

Assuming VM apparatuses E2, E9, E11, and E13 belong to a same virtual network, VNI is 2, and the BUM traffics also need to be interflowed in this virtual network. Thus, a multicast tree is also needed to be built to other Tier3 nodes by using each of the Tier3 nodes as a root. H1 is used as a root firstly, and is allocated a multicast address G6, a multicast tree is built hop-by-hop from H1 to leaf nodes H5, H6, and H7 by PIM signaling. Secondly, H5 is used as a root, and is allocated a multicast address G7, a multicast tree is built hop-by-hop from H5 to leaf nodes H1, H6, and H7 by PIM signaling. Then, a multicast tree is built, respectively, by using each of H6 and H7 as a root. Therefore, the BUM traffic forwarding in the virtual network is accomplished.

Thus, it can be seen that, when a data center applies a PIM multicast tree, the multicast address management is complicate, and the management mode is rigid and inflexible. Due to the disadvantages that the multicast tree has long signaling interaction time due to the PIM protocol itself, and multicast tree re-build is slow when topology changes, the BUM traffics of the data center cannot forwarding efficiently by using the multicast technique. Therefore, many data centers do not use the multicast technique, they restore the BUM traffics to unicast traffics and send the unicast traffics, that is to say, a same data stream is copied as a plurality of traffics and sent to a plurality of destination. Also take Fig. 1 as the example, when the BUM traffics need to be interflowed directly between E1, E8, E10, E14, and E16, E1 sends a packet to H1, and H1 copies 4 unicast packets, and sends the 4 unicast packets respectively to destinations H4, H5, H7, and H8. In this way, bandwidth of Tier3, Tier2, and Tier1 apparatuses are significantly taken by a same traffics, and the performance of copying points to H1 is influenced significantly, and the normal operation of the data center is also influenced.

Therefore, it can be seen that, data centers have high requirements to the multicast technique for their special network architectures and demands, the existed multicast technique may not meet the requirements, and has disadvantages of having high complexity and difficult to manage.

With regard to the above mentioned problems of the technique, there is no effective solution yet.

### SUMMARY

Embodiments of the present disclosure provide a packet forwarding method and a device, apparatus, storage medium, for resolving at least the problem that the existed multicast technique may not meet the requirements of the data centers due to their special network architectures and demands and has disadvantages of having high complexity and difficult to manage.

According to an embodiment of the present disclosure, there is provided a packet forwarding method including: receiving a bit indexed explicit replication (BIER) packet sent by a source apparatus; and forwarding the BIER packet to a destination apparatus according to a set identifier (SI) carried by a packet header of the BIER packet, wherein the SI indicates a cluster in which the destination apparatus resides.

According to another embodiment of the present disclosure, there is provided a packet forwarding device including: a receiving module configured to receive a bit indexed explicit replication (BIER) packet sent by a source apparatus; and a forwarding module configured to forward the BIER packet to a destination apparatus according to a set identifier (SI) carried by a packet header of the BIER packet, wherein the SI indicates a cluster in which the destination apparatus resides.

According to another embodiment of the present disclosure, there is provided a storage medium storing programs which cause, when executed by a processor, the processor to perform the above mentioned packet forwarding method.

According to another embodiment of the present disclosure, there is provided a packet forwarding apparatus including a memory and a processor, wherein the memory stores computer programs executable on the processor, which cause, when executed by the processor, the processor to perform the above mentioned packet forwarding method.

By the embodiments of the present disclosure, since the BIER packet is forwarded to the destination apparatus according to the SI of the cluster in which the destination apparatus resides, the problems in the related technique that the existed multicast technique may not meet the requirements of the data centers due to their special network architectures and demands, and has disadvantages of having high complexity and difficult to manage may be resolved, besides, it is realized that forwarding the BIER packet to the destination apparatus according to the SI of the cluster in which the destination apparatus resides, and forwarding performance of the data center is improved.

### BRIEF DESCRIPTION OF THE DRAWINGS

The accompanying drawings mentioned here are provided for further understanding of embodiments of the present disclosure, and is a part of the present application. Example embodiments of the present disclosure and the illustration thereof are used for explain technique solution of the embodiments of the present disclosure, but not for limit the protection scope of the embodiments of the present disclosure. In the accompanying drawings:
Fig. 1 is a schematic view of a data center networking in the related art;
Fig. 2 is a flow chart of a packet forwarding method according to an embodiment of the present disclosure;
Fig. 3 is a structural block diagram of a packet forwarding device according to an embodiment of the present disclosure;
Fig. 4 is another structural block diagram of a packet forwarding device according to an embodiment of the present disclosure;
Fig. 5 is a schematic flow chart of a packet forwarding method according to an embodiment of the present disclosure;
Fig. 6 is a schematic view of encapsulation of a BIER head according to an embodiment of the present disclosure;
Fig. 7 is a schematic view of a BIER forwarding method according to an embodiment of the present disclosure;
Fig. 8 is a schematic view of another BIER forwarding method according to an embodiment of the present disclosure;
Fig. 9 is a schematic view for implementing a packet forwarding method according to an embodiment of the present disclosure;
Fig. 10 is an implementation schematic view of a packet forwarding method according to embodiment of the present disclosure;
Fig. 11 is a schematic view of a forwarding table of a packet forwarding method according to an embodiment of the present disclosure;
Fig. 12 is a schematic view of another forwarding table of a packet forwarding method according to an embodiment of the present disclosure;
Fig. 13 is another implementation schematic view of a packet forwarding method according to an embodiment of the present disclosure;
Fig. 14 is a schematic view of encapsulation of a BIER head according to an embodiment of the present disclosure;
Fig. 15 is another implementation schematic view I of a packet forwarding method according to an embodiment of the present disclosure;
Fig. 16 is a schematic view of encapsulation of another BIER head according to an embodiment of the present disclosure;
Fig. 17 is another implementation schematic view II of a packet forwarding method according to an embodiment of the present disclosure;
Fig. 18 is a schematic view of another forwarding table of a packet forwarding method according to an embodiment of the present disclosure; and
Fig. 19 is a schematic view of a hardware entity of a packet forwarding apparatus according to an embodiment of the present disclosure.

### DETAILED DESCRIPTION

Hereinafter, the present disclosure is described in detail with reference to the accompanying drawings and in combination with embodiments. It should be noted that the embodiments of the present application and features of the embodiments may be combined with each other when there are no contradictions.

It should be noted that, in the specification and claims and the above mentioned accompanying drawings of the present disclosure, terms "first" and "second" are used only to distinguish similar objects, not describe a particular sequence or priorities.

In a data center, network apparatuses are divided into two parts, Spine apparatuses and Leaf apparatuses, by using common topology. Generally, The Leaf apparatus refers to an access apparatus connected with a server in which a VM is located. The Spine apparatus is an apparatus for implementing forwarding between the Leaf apparatuses. The level 3 Tier apparatus (Tier3 apparatus) mentioned in the present disclosure commonly corresponds to the access apparatus, that is, the Leaf apparatus, Tier2 apparatus commonly corresponds to a converge apparatus, and Tier1 apparatus is an apparatus for implementing forwarding between the Leaf apparatuses. The Spine apparatus may include the Tier2 apparatus and the Tier1 apparatus. In practical, there may be Tier2-plus-Tier3 apparatus, that is, the converge apparatus and the access apparatus are integrated into a same apparatus. In this situation, Tier1 apparatus may be the Spine apparatus, and the Leaf apparatus may be the access apparatus connected with a server in which a VM is located, depending on the specific deployment. For convenience, apparatus of each level is represented by TierN in the embodiments of the present disclosure.

### Embodiment One

In the embodiment, a packet forwarding method is provided. Fig. 2 is a flow chart of a packet forwarding method according to an embodiment of the present disclosure. As shown in Fig. 2, the method includes the following steps S202 to S204.

At step S202, a bit indexed explicit replication (BIER) packet sent by a source apparatus is received.

At step S204, the BIER packet is forwarded to a destination apparatus according to a set identifier (SI) carried by a packet header of the BIER packet, wherein the SI indicates a cluster in which the destination apparatus resides.

According to the embodiment of the present disclosure, since the BIER packet is forwarded to the destination apparatus according to the SI of the cluster in which the destination apparatus resides, the problems in the related technique that the existed multicast technique may not meet the requirements of the data centers due to their special network architectures and demands, and has disadvantages of having high complexity and difficult to manage may be resolved, besides, it is realized that forwarding the BIER packet to the destination apparatus according to the SI of the cluster in which the destination apparatus resides, and forwarding performance of the data center is improved.

In other embodiments, before receiving the BIER packet sent by the source apparatus, the method further includes: clustering the Tier2 apparatuses and the Tier3 apparatuses of the data center, and allocating a SI to each cluster; and determining BFR-ID value of each destination apparatus according to the allocated SI, wherein the BFR-ID is carried in the packet header of the BIER packet, and the destination apparatus includes: a converge apparatus, an access apparatus.

In other embodiments, the BFR-ID value is determined according to at least one of the following ways.

The determination is performed by receiving commands issued from a controller of the data center through a specified data model; by receiving commands issued from the controller through a path computation element (PCE) extension protocol; by receiving commands issued from the controller through a border gateway protocol (BGP) extension; by receiving commands issued from the controller through a border gateway protocol-path state extension; by receiving commands issued from the controller through an Openflow protocol extension.

In other embodiments, the above method further includes: forwarding the BIER packet to the destination apparatus according to at least the SI of the cluster in which the destination apparatus resides, a virtual network identity, and the BFR-ID.

In other embodiments, a capability that an apparatus for forwarding between Leaves in the data center supports forwarding according to the SI or a capability that the converge apparatus in the data center supports forwarding according to the SI is reported to the controller.

The technique solution of the above Embodiment One may be understood through the following example technique solution including the following two steps 1) and 2).

At step 1), the BIER packet sent by the source apparatus is received, wherein the BIER packet carries the virtual network identity and the bit forwarding router identity (BFR-ID) of the destination apparatus, and the source apparatus and the destination apparatus are resided in the data center.

At step 2), the BIER packet is forwarded to the destination apparatus according to the SI of the cluster in which the destination apparatus resides, the virtual network identity, and the BFR-ID, wherein the BIER packet indicates that the destination apparatus sends the BIER packet to a virtual machine VM corresponding to the virtual network identity according to the virtual network identity in the BIER packet.

In other embodiments, before receiving the BIER packet sent by the source apparatus, the method further includes: clustering converge apparatuses and access apparatuses of the data center, and allocating a set identifier SI to each cluster; and determining BFR-ID value according to the allocated SI.

In other embodiments, the step of forwarding the BIER packet to the destination apparatus according to the SI of the cluster in which the destination apparatus resides, the virtual network identity, and the BFR-ID includes: forwarding the BIER packet to the destination apparatus according to the SI of the cluster in which the destination apparatus resides, the virtual network identity, and the BFR-ID, when triggered by pre-configured configuration information; or forwarding the BIER packet to the destination apparatus according to the SI of the cluster in which the destination apparatus resides, the virtual network identity, and the BFR-ID, when triggered by commands issued by the controller of the data center; or directly forwarding the BIER packet to the destination apparatus according to the SI of the cluster in which the destination apparatus resides, the virtual network identity, and the BFR-ID.

In other embodiments, the commands issued by the controller of the data center is received according to at least one of the following ways: receiving commands issued from the controller through a specified data model; receiving commands issued from the controller through a PCE extension protocol; receiving commands issued from the controller through a BGP extension; receiving commands issued from the controller through a border gateway protocol-path state extension; and receiving commands issued from the controller through an Openflow protocol extension.

In other embodiments, the BFR-ID is encapsulated into the BIER packet header of the BIER packet.

By the above technique solution, the BIER technique is applied in the data center, and the BIER deployment is more optimized, which makes it easier for users to use BIER technique, makes the forwarding performance more efficient, and provides a significant impetus for the development of the multicast technique and data center network.

Through the above description of the above embodiments, those ordinary skilled in the art will appreciate that the method according to the above mentioned embodiments may be implemented in software and required universal hardware platform, and may be implemented in hardware as well, but the former is better in many circumstances. Based on such understanding, the technical solution of the present disclosure, which is essential to the prior art, or part of the technical solution, may be embodied in a form of a software product stored in a storage medium (such as ROM/RAM, magnetic disc or optical disk) including several instructions, which are used to cause a computer device (which may be a mobile phone, personal computer, server, or network device, etc.) to perform methods of various embodiments of the present disclosure. The above described storage medium includes any medium that may store program check code, such as a USB stick, mobile hard drive, Read-Only Memory (ROM), Random Access Memory (RAM), magnetic disc or optical disk etc.

### Embodiment Two

In the embodiment, a packet forwarding device is provided. The device is used for implementing the above embodiments, those have been described will not repeat here. As used herein, the term "module" may be a combination of software and/or hardware that can perform predefined functions. Although the devices described in the following embodiment are preferably implemented by software, implementations through hardware or a combination of software and hardware are also possible and can be conceived.

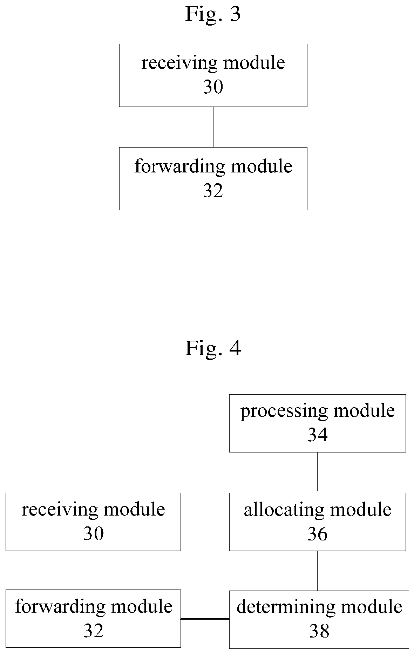

Fig. 3 is a structural block diagram of a packet forwarding device according to an embodiment of the present disclosure. As shown in Fig. 3, the device includes a receiving module 30 and a forwarding module 32.

The receiving module 30 is configured to receive a BIER packet sent by a source apparatus.

The forwarding module 32 is configured to forward the BIER packet to a destination apparatus according to a SI carried by a packet header of the BIER packet, wherein the SI indicates a cluster in which the destination apparatus resides.

According to the embodiment of the present disclosure, since the BIER packet is forwarded to the destination apparatus according to the SI of the cluster in which the destination apparatus resides, the problems in the related technique that the existed multicast technique may not meet the requirements of the data centers due to their special network architectures and demands, and has disadvantages of having high complexity and difficult to manage may be resolved, besides, it is realized that forwarding the BIER packet according to the SI of the cluster in which the destination apparatus resides, and forwarding performance of the data center is improved.

In other embodiments, Fig. 4 is another structural block diagram of a packet forwarding device according to an embodiment of the present disclosure. As shown in Fig. 4, in addition to all the modules shown in Fig. 3, the device further includes a processing module 34, an allocating module 36, and a determining module 38.

The processing module 34 is configured to cluster Tier2 apparatuses and Tier3 apparatuses of the data center.

The allocating module 36 is configured to allocate a SI to each cluster.

The determining module 38 is configured to determine BFR-ID value of each of the destination apparatuses according to the allocated SI, wherein the BFR-ID is carried in the packet header of the BIER packet, and the destination apparatus includes the Tier2 apparatus and the Tier3 apparatus.

In other embodiments, the determining module 38 is further configured to determine the BFR-ID value according to at least one of the following ways.

The determination is performed by receiving commands issued from a controller of the data center through a specified data model; by receiving commands issued from the controller through a PCE extension protocol; by receiving commands issued from the controller through a BGP extension; by receiving commands issued from the controller through a border gateway protocol-path state extension; by receiving commands issued from the controller through an Openflow protocol extension.

In other embodiments, the forwarding module 32 is further configured to forwarding the BIER packet to the destination apparatus according to at least the SI of the cluster in which the destination apparatus resides, a virtual network identity, and the BFR-ID.

It is to be noted that the above modules may be implemented respectively by software or hardware. For the latter situation, the above modules may be all located in the same processor; or they may, in any combinations thereof, be located in different processors; but not limited thereto.

In the embodiments of the present disclosure, a storage medium is provided. The storage medium stores programs which cause, when executed by a processor, the processor to perform any of the above packet forwarding methods.

To better understand the above packet forwarding process, herein the technique solution is described in detail in combination with the embodiments.

### Embodiment 1

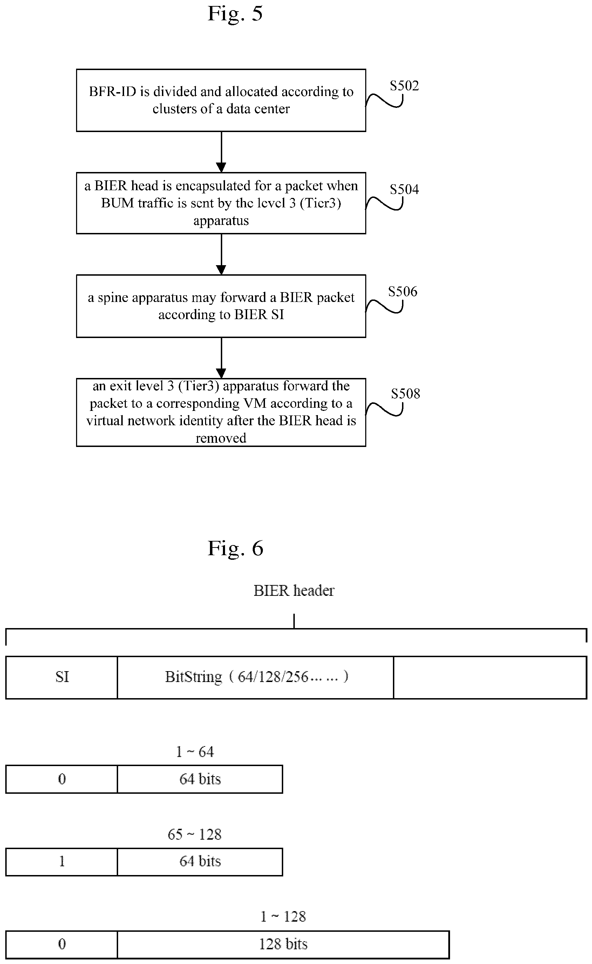

Fig. 5 is a schematic flow chart of a packet forwarding method according to an embodiment of the present disclosure. As shown in Fig. 5, the method includes steps S502 to S508.

At step S502, BFR-ID is divided and allocated according to clusters of a data center.

The "cluster" means a group of apparatuses having a same or similar functions or a same geographical location, the group of apparatuses are managed by a same management apparatus, which may be a ToR (Top of Rack) apparatus or a router gateway apparatus. The group of apparatuses and the management apparatus thereof are collectively referred to as a Cluster. In the present disclosure, the management apparatus is corresponding to a Tier2 apparatus, and the apparatus managed by the management apparatus is a Tier3 apparatus.

For allocating the BFR-ID, it may be performed by direct configuring on the apparatus, or allocating through a network management system or a controller.

In other embodiments, when allocating BFR-ID by the network management system or the controller, the following ways may be adopted: issuing through a data model, protocol modes of PCE (Path Computation Element) extension or BGP (Border Gateway Protocol), BGP-LS (BGP-Link State), Openflow extension, etc., specific contents may be encapsulated in TLV format.

The apparatus (that is, the Tier3 apparatus) that a BFR-ID is going to be allocated in each cluster may be a physical router or a switch forwarding apparatus, and may also be a virtual forwarding module.

At step S504, a BIER head is encapsulated for a packet when BUM traffic is sent by the level 3 (Tier3) apparatus.

The Tier3 apparatus (entrance level 3 apparatus) encapsulates the BFR-ID of a corresponding destination Tier3 apparatus to the BIER head according to a virtual network identity.

When the destination Tier3 apparatus (exit level 3 apparatus) belongs to a plurality of clusters, a plurality of BIER packets with different SI are encapsulated and sent.

At step S506, a spine apparatus (at least including a Tierlapparatus, and may also including the Tier2 apparatus) may directly perform forwarding according to BIER SI.

The spine apparatus may directly perform forwarding according to BIER SI of the packet according to configuration regulation or commands issued by the controller.

A BIER SI forwarding capability announcement may be performed between the spine apparatuses, or a BIER SI forwarding capability communication may be performed between the spine apparatus and the controller.

In other embodiments, when the BIER SI forwarding capability announcement is performed between the spine apparatuses, it may be performed through protocol extension mode such as BGP/OSPF/ISIS/BABEL etc.

In other embodiments, the spine apparatus may report BIER SI forwarding capability to the controller apparatus by issuing through a data model, protocol modes of PCE extension or BGP, BGP-LS, Openflow extension, etc., specific contents may be encapsulated in TLV format.

In other embodiments, when a BIER SI forwarding instruction is issued by the controller to the spine apparatus, the following ways may be adopted: issuing through a data model, protocol modes of PCE extension or BGP, BGP-LS, Openflow extension, etc., specific contents may be encapsulated in TLV format.

At step S508, when the exit level 3 (Tier3) apparatus receives the BIER packet, the BIER head is removed, and the BIER packet is forwarded to a corresponding VM according to the virtual network identity.

### Embodiment 2

BIER (Bit Indexed Explicit Replication) is a multicast data forwarding technique, in which a node at network edge is represent by a bit, and multicast traffic is transmitted in intermediate network. A specific BIER head is encapsulated additionally, and all of the destination nodes of the multicast flow are marked in a form of bit string in the packet header. An intermediate network forwarding node is routed according to the bit, such that the traffics may be ensured to be sent to the all of the destination nodes. The intermediate node forwarding apparatus floods and sends node information in advance through internal protocols, such as OSPF (OSPF Open Shortest Path First) protocol, ISIS (Intermediate System-to-intermediate System) protocol, BGP (Border Gateway Protocol), or Babel protocol, etc. in three-tier network, a BIFT (Bit Index Forwarding Table) table for guiding the BIER forwarding is formed, and forwarding the packet to the destination node is performed according to the BIFT when traffics of the encapsulated BIER head are received. A data plane forwarding technique like BIER has no a problem of establishing a multicast tree, such that time delay caused by the multicast tree establishment is eliminated, and a convergence speed is equivalent to that of the OSPF and ISIS protocols, therefore significantly reduced time delay as compared with the prior multicast tree re-build method.

The encapsulation of the BIER head is shown in Fig. 6, BitString in the BIER head encapsulation is a bit string, which indicated with BFR-ID information of all of the destination nodes. Length of the bit string may be varied depending on forwarding BSL. Assuming the BSL is set to 64, the bit string in the BIER head has a length of 64. Assuming the encapsulated destination node BFR-ID information exceeds 64, SI information is increased. For example, when the SI is 1, the bit string has a length of 64 bits, but the encapsulated BFR-ID information is 65 to 128, and so on. Assuming BSL is 128, the SI is 0, and the bit string may represent a BFR-ID of 1-128.

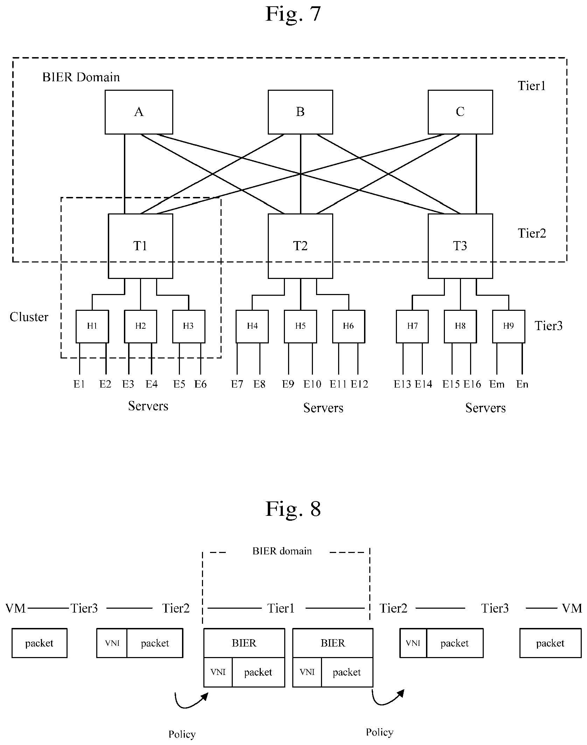

BIER technique may be deployed on the Tier2 and Tier1 apparatuses for its great advantages in data center scenarios, as shown in Fig. 7. Tier2 apparatuses are edge apparatuses of the BIER domain, each of the Tier2 apparatuses may be provided or allocated a BFR-ID (Bit-Forwarding Router Identifier), both of the Tier2 and Tier1 apparatuses support BIER forwarding, and may realize point to multipoint sending of the Tier2 apparatus. For example, E1 and E8, E10 and E14, E16 belong to a same virtual network, and BUM traffics need to be interacted therebetween. A specific forwarding process is shown in Fig. 8. When the traffic is sent from E1 to T1 through H1, the BIER head with destinations of T2 and T3 is encapsulated by T1, thus, the traffic is sent to T2 and T3 through the BIER forwarding between the Tier2 and Tier1 apparatuses, and is forwarded to H4, H5, H7, and H8 apparatuses by T2 and T3, and then to VMs E8, E10, E14, E16 from the Tier3 apparatuses. There is no need to allocate multicast during the BIER forwarding between the Tier2 and Tier1 apparatuses, and there is no need to build a multicast tree through PIM signaling.

Therefore, BIER technique greatly reliefs huge bandwidth consumption due to repeated transmission of unicast, at the same time, it also avoids complex multicast address management and traditional multicast PIM signaling interaction, which has obvious advantages. However, such deployment also raises a problem. Since edge apparatuses of the BIER domain are deployed to level Tier2, the Tier3 apparatuses are not belong to the BIER domain, thus the Tier3 apparatuses are not aware of the BIER destination that need receiving the BUM traffic. Thus, the Tier3 apparatus may only send a packet to the Tier2 apparatus, which performs BIER encapsulation on the packet and forwards the same through a specific strategy transformation mechanism, that is, the destination of the BIER packets is set as T2 and T3. When the packet arrives T2 and T3, the BIER encapsulation is removed, and the packet may be forwarded to Tier3 apparatuses H4, H5, H7, and H8 that need to receiving BUM traffic by adopting policy or by other means, and then it may be forwarded from the Tier3 apparatuses to VMs. Thus, it can be seen that the forwarding can only be performed properly when there is a special policy transformation process on the Tier2 apparatus because other receiving apparatuses are not intuitively visible to the Tier3 apparatus. However, the Tier2 apparatuses are core components in the data center network, if there are too many policy processes, processing efficiency of the Tier2 apparatuses may be influenced.

Therefore, there is a problem that policy management is complex when the BIER deployment sets the Tier2 apparatuses as edge apparatuses. However, the BIER technique cannot be deployed directly on the Tier3 apparatuses, since the Tier3 apparatuses are in a larger number, and general BIER deployment method cannot be adopted because of characteristics of the Tier3 apparatuses, which may otherwise lead to a problem of failure in optimizing network management, and there is also a problem that management is complex for new Tier3 apparatuses during network expanding.

For the Tier3 apparatuses H1 to Hn, if a traditional allocation method is used, the allocated BFR-IDs in sequence are 1, 2, 3, ..., n. This way of allocation cannot reflect location information of the Tier3 apparatuses, and cannot reflect information of the Tier3 apparatuses having a same function or other similar points. When upgrading the network , the number of the Tier3 apparatuses is increasing as the increased number of VMs, if allocating BFR-IDs in sequence for new Tier3 apparatuses without re-planning the BFR-ID, BFR-ID allocation of the whole network will be orderless; and if the BFR-ID is re-planned, user overhead is increased additionally.

According to the technique solution of the embodiments of the present disclosure, by dividing the BFR-IDs according to clusters, that is, the Tier3 apparatuses of a same cluster have a same BIER SI (Set Identifier). The dividing of the SI is based on the total number of the edge apparatuses in the network, that is, the number of the Tier3 apparatuses and BSL length used in the network, for example, if the BSL length is 64, a corresponding range of BFR-ID is from 1 to 64 when the SI is 0; from 65 to 128 when the SI is 1; from 129 to 192 when the SI is 2, and so on. Assuming the number of the Tier3 apparatuses in the data center is 1000, 16 clusters may be divided , and the SI is from 0 to 15.

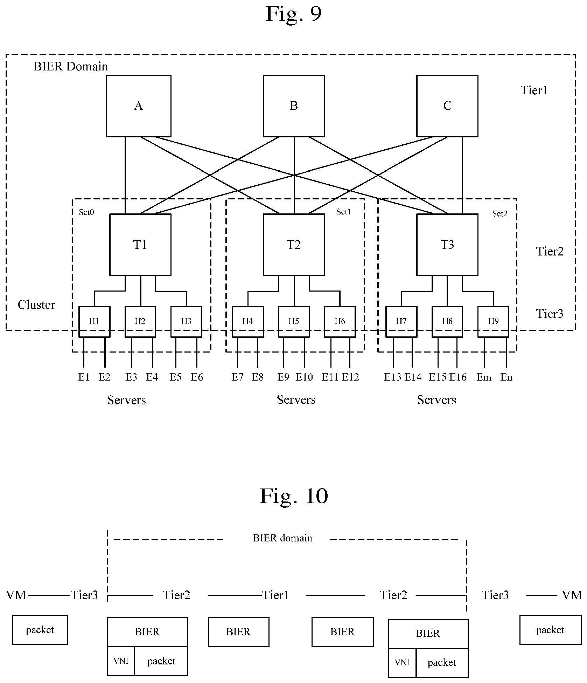

Referring to Fig. 9, for the convenience of description, the data center network is simplified, and assuming that the BIER packet encapsulating and forwarding are performed under the assumption that BSL (Bit String Length) is 64. A BIER forwarding table is already formed by the Tier apparatuses. The Tier2 apparatus T1 and the Tier3 apparatuses H1, H2, and H3 under the Tier2 apparatus T1 have a same SI 0, allocated BFR-IDs for the Tier3 apparatuses H1, H2, and H3 are 1, 2, 3, respectively. As to the Tier2 apparatus T2 and the Tier3 apparatuses H4, H5, and H6 under the Tier2 apparatus T2, they have a same SI 1, allocated BFR-IDs for the Tier3 apparatuses H4, H5, and H6 are 65, 66, and 67, respectively. As to the Tier2 apparatus T3 and the Tier3 apparatuses H7, H8, and H9 under the Tier2 apparatus T3, they have a same SI 2, allocated BFR-IDs for the Tier3 apparatuses H7, H8, and H9 are 129, 130, 131, respectively. That is, the BFR-IDs are divided by using 64 as a step size. In this way, when network is upgraded subsequently and the number of the Tier3 apparatuses increases, new apparatus may have a sequentially increased BFR-ID as long as the number does not exceed the length of BSL, for example, when a Tier3 apparatus H20 is added under the Tier2 apparatus T1, the Tier3 apparatus H20 may have BFR-ID 4. If a data center has many VM apparatuses, and correspondingly has many Tier3 apparatuses, and BSL is set to 128, the number of the Tier3 apparatuses in each cluster is within 128, BFR-IDs 1 to 128 are allocated to the Tier3 apparatuses under the Tier2 apparatus T1, BFR-IDs 129 to 256 are allocated to the Tier3 apparatuses under the Tier2 apparatus T2, and so on. Thus, the BFR-IDs allocated to all the apparatus may have indications of specific location or a same attribute information (that is, in which cluster), and may easily adapt to network upgrade.

Assuming that the VM apparatuses E1, E8, E10, E14, and E16 are in a same virtual network, and there is BUM traffics need to interflow with each other. The data center has a BIER forwarding BSL 64, according to the BFR-ID allocation principle of the present disclosure, BFR-IDs allocated to the Tier3 apparatus H1, H4, H5, H7, and H8 are 1, 65, 66, 129, and 130, respectively. BUM packets interflowed between the VMs will arrive destination Tier3 apparatuses and a corresponding VM apparatuses through the BIER forwarding method.

Specific packet forwarding process is shown in Fig. 10. Assuming that the virtual network has an identification VNI 9, when a two-tire or three-tire packet is sent from E1 to H1, H1 provides the packet with a virtual network identity according to the virtual network in which the VM resides. The virtual network identity may be encapsulated in forms of VXLAN, GENEVE, etc., then the BIER head is encapsulated. Since the BIER forwarding BSL is set to 64, according to BFR-ID of the destination Tier3 apparatuses, the packet is copied into two pieces of BIER packet. The first BIER packet has a BIER head SI 1, and the destination bit string is encapsulated with 1 and 2 corresponding to H4 (65) and H5 (66). The second BIER packet has a BIER head SI 2, and the destination bit string encapsulated with 1 and 2 corresponding to H7 (129) and H8 (130).

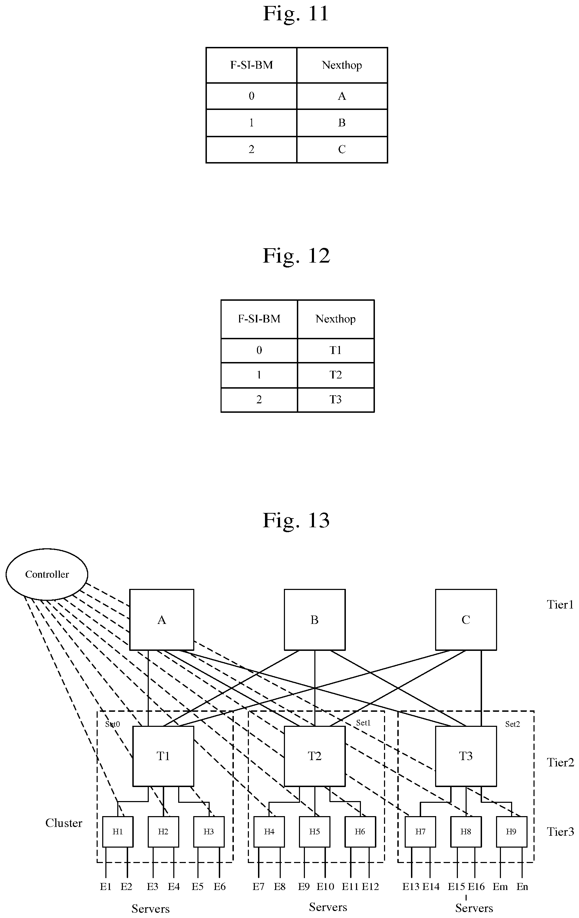

The two packets are forwarded through the Tier2 and Tier1 apparatuses. Because the Tier2 and Tier1 apparatuses perform the forwarding according to the BIER heads regardless of the packets encapsulated, the packets are represented by the BIER packets. The Tier1 apparatus receives, from a controller, instructions, for example, issued through BGP-LS expansion, of forwarding according to BIER SI. A forwarding table in the Tier1 apparatuses is similar to that shown in Fig. 12, from which it can be seen that the table is simple, when SI is 0, the next hop is the Tier2 apparatus T1; when SI is 1, the next hop is T2, and when SI is 2, the next hop is T3.

It is to be noted that, nodes having BIER SI forwarding capability may not be the Tier1 apparatuses, the Tier2 apparatuses may have the capability as well. In particular, the entrance Tier2 node receiving traffics from Tier3 apparatuses and getting ready to forwarding into a spine network may also create a BIER SI forwarding table (as shown in Fig. 11) similar to the forwarding table of the Tier1 apparatus, therefore packets may be forwarded to the Tier1 apparatus rapidly and accurately. Since each of the Tier2 apparatuses may be an entrance apparatus of the spine network, each of the Tier2 apparatuses may have the BIER SI capability. Similarly, interaction capabilities with other nodes may be extended through protocol such as BGP/OSPF/ISIS/BABEL etc., and capabilities reporting and enable instructions accepting may be performed with the controller. Herein, assume a capabilities enable instruction is received from the controller, and the fuction of forwarding according to BIER SI is enabled.

In the embodiment, when the Tier2 apparatus T1 receives two BIER packets encapsulated with SI 1 or SI 2, since the function of directly forwarding according to BIER SI is enabled, based on the SI forwarding table shown in Fig. 11, the first packet is sent to the spine Tier1 apparatus B in a case that the SI is 1 regardless of destination bit string in the BIER head, and the second packet is sent to the Tier 1 apparatus C in a case that the SI is 2.

When the spine Tier1 apparatus B receives the packet, assuming the forwarding table is the same as that of Fig. 12, since the function of directly forwarding according to BIER SI is enabled, the node forwarding the packet to the Tier2 apparatus T2 in a case that the SI is 1. For the same reason, when the Tier1 apparatus C receives the packet, the packet is directly sent to the Tier2 apparatus according to BIER SI forwarding table. When the function of directly forwarding according to BIER SI is enabled, the function of forwarding according to a traditional BIER forwarding table may also maintained in the Tier1 apparatus, especially in a case that there are other BIER forwarding apparatuses in the network.

In addition to the BIER SI forwarding table, the Tier2 apparatuses may also have the traditional BIER forwarding table, thus, the Tier2 apparatuses T2 and T3 may send the corresponding one packet respectively to the Tier3 apparatuses H4, H5, H7, and H8 according to their own BIER forwarding table.

When a packet arrives one of the destination Tier3 apparatuses H4, H5, H7, H8, the BIER head is removed, a destination VM is determined according to the virtual network identity, and the packet is forwarded to a corresponding one of the VM apparatus E8, E10, E14, and E16.

Similarly, assuming that VM apparatus E8 also needs to send BUM traffics to other apparatuses of the virtual network, when the packet is sent from E8 to H4, a virtual network identity is encapsulated at H4 by VXLAN or GENEVE firstly, then the BIER packets are encapsulated according to destination apparatus information of the same virtual network. In the instance, three BIER packets are encapsulated, in the first BIER packet header, the SI is 0, and destination bit string is encapsulated with 1 corresponding to H1 (1); in the second BIER packet header, the SI is 1, and destination bit string is encapsulated with 2 corresponding to H5 (66); in the third BIER packet header, the SI is 2, and destination bit string is encapsulated with 1 and 2 corresponding to H7 (129) and H8 (130). Similarly, E10, E14, and E16 may have the same encapsulation and process.

### Embodiment 3

As shown in Fig. 13, as to the allocation of BFR-IDs, in addition to the way of directly deploying on the Tier3 apparatuses, the BFR-ID issued by the network management system or a controller may also possible.

Acontroller is commonly adopted in a data center. Assuming the data center has a controller apparatus, the controller apparatus may perform BFR-ID allocation on the Tier3 apparatuses according to the allocating method of the present disclosure.

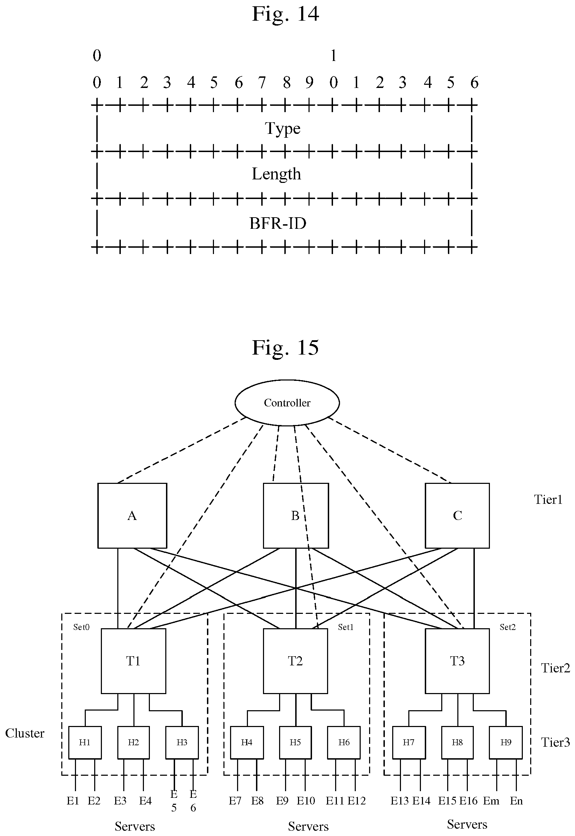

The controller may send BFR-IDs to the Tier3 apparatuses in the following ways: issuing through a data model, protocol modes of PCE extension or BGP, BGP-LS extension, etc., specific contents may be encapsulated in TLV format, similar to those shown in Fig. 14, and is not limited in the embodiment.

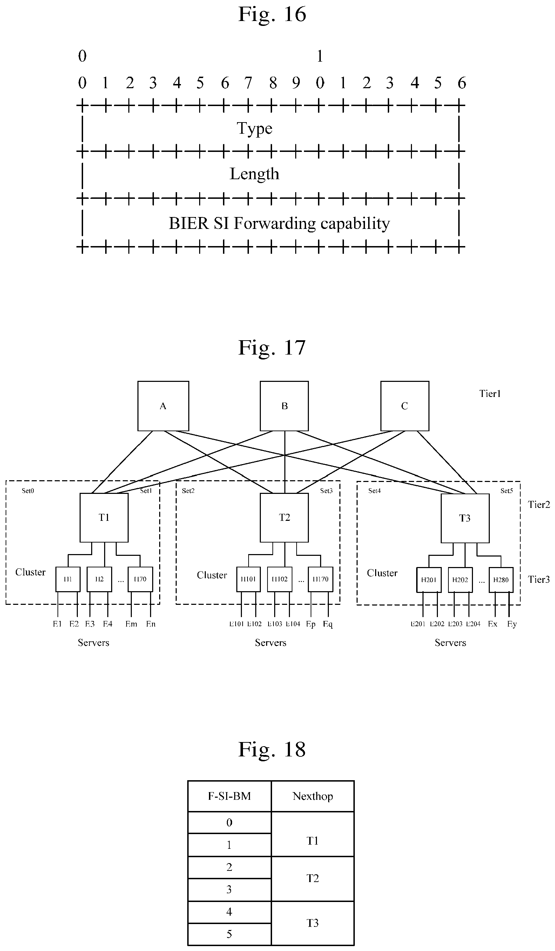

As shown in Fig. 15, as to BIER SI forwarding capability of the spine node, in addition to enable by configuring method, a controller interacting method may be adopted. The spine node may report to the controller that it supports BIER SI forwarding capability, and the reporting format is shown in Fig. 16. The controller may issue instruction for enabling BIER SI forwarding according to the node's capability, format of the issued instruction may adopt the format similar to that of Fig. 16. That is to say, the spine node not only supports a common BIER forwarding (that is, performing the forwarding according to Bitstring) in default, but also optionally supports directly forwarding according to BIER SI.

For certain networks, when the controller not directly control all the spine apparatuses, the spine apparatuses may interact through protocols therebetween, for example, when the spine apparatuses interact through OSPF protocol, BIER SI forwarding capability of the spine apparatus may be carried, and TLV may be taken as the extension mode, as shown in Fig. 16. In this way, the controller may acquire all topologic of all the spine apparatuses and their BIER SI forwarding capabilities through one apparatus (for example, the Tier2 apparatus T1), and the way may be BGP-LS extension. When the Tier2 apparatus T1 reports OSPF protocol topologic through BGP-LS, BIER SI forwarding capability extension carried by the Tier2 apparatus T1 is reported as well.

Assuming the data center network has a BIER encapsulation BSL of 64, the controller allocates BFR-IDs 1, 2, 3, 65, 66, 67, 129, 130, and 131 respectively to the Tier2 apparatuses H1 to H9, that is, H1 to H3 are within SI 0, H4 to 6 are within SI 1, and H7 to H9 are within SI 2.

As shown in Fig. 13, assuming that the VM apparatuses E3, E7, and E11 belong to a same virtual network, and BUM traffics need to be interacted. When a packet is sent from E3 to H2, VNI (for example, 3) information thereof is encapsulated at H2 according to the access of the E3 apparatus. The virtual network identity may be encapsulated in VXLAN, GENEVE mode, etc., then a BIER packet is encapsulated according to a situation that the destination VMs are accessed into apparatuses H4 and H6. The BIER packet header has its destination set to BFR-ID including H4 and H6, that is, the BIER packet header is encapsulated with SI 1 and bit string information of 1 and 3 corresponding to H4 (65) and H6 (67), respectively.

H2 apparatus sends the packet to the T1 apparatus according to a BIER forwarding table. If the T1 apparatus has enabled the function of BIER SI forwarding through configuring, the packet may be sent to B apparatus according to SI 1; if the T1 apparatus does not support the function of BIER SI forwarding, or the function is disabled, the packet may also be forwarded to B apparatus according to BIER forwarding table and BitString. When SI forwarding function is enabled at B apparatus, the packet may be directly forwarded to T2 apparatus according to SI information; if B apparatus does not support SI forwarding function, or the function is disabled, the packet may also be forwarded to T2 apparatus according to a traditional BIER table and BitString. The packet is forwarded to the Tier3 apparatus H4 and H6 by T2 apparatus according to BitString information encapsulated in the packet. After the BIER head is removed at H4 and H6, the packet is forwarded to corresponding VM apparatuses E7 and E11 according to VNI information encapsulated in the packet.

### Embodiment 4

Referring to the network shown in Fig. 17, assuming Tier3 apparatuses connected to a Tier2 apparatus are in a large number, for example, 70 to 80, and assuming that the data center has a forwarding BSL of 64 but not 128, therefore, apparatuses in each cluster may be within one of a plurality of SIs.

Assuming that BFR-IDs are directly configured, clusters managed by T1, T2, and T3 apparatus respectively correspond to BFR-ID ranges 1 to 128, 129 to 256, 257 to 384. In particular, BFR-IDs of H1 and H2 are 1 and 2, respectively, in this way, BFR-ID of H70 is 70. BFR-IDs of H101 and H102 are 129 and 130, respectively. In this way, BFR-ID of H170 is 198. BFR-IDs of H201 and H202 are 257 and 258, respectively. In this way, BFR-ID of H280 is 336.

Assuming that VM apparatuses belonging to the same virtual network as VM apparatus E1 are respectively accessed to H101, H102, H170, H201, and H202, the process of sending BUM traffics is shown in Fig. 10. Assuming that the identification of the virtual network is 10, when the two-tire or three-tire packet is sent from E1 to H1, H1 provides the packet with a virtual network identity according to the virtual network in which the VM resides. The virtual network identity may be encapsulated in forms of VXLAN, GENEVE, etc., then the BIER head is encapsulated. Since the BIER forwarding BSL is set to 64, according to BFR-ID of the destination Tier3 apparatuses, the packet is copied into three pieces. The first BIER packet has a BIER head SI 2, and destination bit string is encapsulated with 1 and 2 corresponding to H101 and H102. The second BIER packet has a BIER header SI 3, and the destination bit string is encapsulated with 6 corresponding to H170. The third BIER packet has a BIER header SI 4, and the destination bit string is encapsulated with 1 and 2 corresponding to H201 and H202.

The packet is sent from H1 to T1 apparatus according to the BIER forwarding table of H1. Assuming that T1 apparatus has not enable BIER SI forwarding function, the packet is sent from T1 apparatus to B apparatus and A apparatus according to BIER forwarding table. Assuming that the spine network supports BIER SI forwarding function, and SI forwarding tables in A apparatus and B apparatus are similar to that of Fig. 18. Therefore, the packet is sent from A apparatus and B apparatus to T2 and T3 apparatuses according to BIER SI forwarding table, and is sent from T2 and T3 apparatuses to each of the Tier3 apparatuses according to BIER forwarding tables of T2 and T3 apparatuses. The BIER head is removed at each of H101, H102, H170, H201, and H202, destination VM is determined according to the virtual network identity, and the packet is forwarded to the VM apparatuses.

As to the VM apparatus accessed into H101, the BUM packet is sent in the same process, when the packet is arrived H101, a plurality of BIER packets are encapsulated according to a situation of the destination Tier3 apparatuses. The first BIER packet has a BIER header SI 0, and destination bit string is encapsulated with 1 corresponding to H1; the second packet BIER has a BIER head SI 2, and destination bit string is encapsulated with 2 corresponding to H102; the third BIER packet has a BIER header SI 3, and destination bit string is encapsulated with 6 corresponding to H170; the fourth packet has a BIER header SI 4, and destination bit string is encapsulated with 1 and 2 corresponding to H201 and H202. When being BIER forwarded, the packet arrives the destination Tier3 apparatuses, after removing the BIER head at the Tier3 apparatuses, the packet is forwarded to corresponding VM apparatuses according to the virtual network identity. BUM traffics are sent in the same encapsulation and process for H102, H170, H201, and H202.

According to the technique solutions of the above various embodiments, the BIER technique may applied in the data center, and the BIER deployment is more reasonable, thus the use of BIER technique is easier for users, forwarding efficiency is higher, which plays a very important role in promoting the development of the multicast technique and the data center network.

It should be noted that in the embodiments of the present disclosure, when the above mentioned packet forwarding method is implemented in software function modules, and is sold or used as an independent product, it may be stored in a computer readable storage medium. Based on such understanding, the essence part or the part that contributes to the existing technology of the technique solutions of the embodiments of the present disclosure may be embodied in the form of software products, the computer software product is stored in a storage medium, which includes several instructions causing a packet forwarding apparatus to perform the whole or part of method of various embodiments of the present disclosure. The above mentioned storage medium includes various mediums (such as U Disk, Mobile Hard Disk, Read Only Memory (ROM), magnetic disc or CD, etc.) that can store program codes. In this way, the embodiments of the present disclosure are not limited to any specific combination of hardware and software.

Correspondingly, an embodiment of the present disclosure further provides a packet forwarding apparatus including a memory and a processor. The memory stores computer programs executable on the processor, which cause, when executed by the processor, the processor to perform the above mentioned packet forwarding method.

Correspondingly, an embodiment of the present disclosure further provides a storage medium. In the embodiment, the above mentioned storage medium may be configured to store program code for performing the following steps S1 and S2.

At step S1, a BIER packet sent by a source apparatus is received.

At step S2, the BIER packet is forwarded to a destination apparatus according to a SI carried by a packet header of the BIER packet, wherein the SI indicates a cluster in which the destination apparatus resides.

In other embodiments, the storage medium is further configured to storing program code for performing the following steps S1 and S2.

At step S1, converge apparatuses and access apparatuses of a data center are clustered, and a SI is allocated to each cluster.

At step S2, BFR-ID value of each of the destination apparatuses is determined according to the allocated SI, wherein the BFR-ID is carried in the packet header of the BIER packet, and the destination apparatus includes the converge apparatuses and the access apparatuses.

In the embodiment, the above mentioned storage medium may include, but not limit to, various mediums (U Disk, Read Only Memory (ROM), Random Access Memory (RAM), mobile hard disc, magnetic disk or CD, etc.) that can store program codes.

Specific examples in the embodiment may be referred to the examples described in the above mentioned embodiments, and will not describe redundantly here in the embodiment.

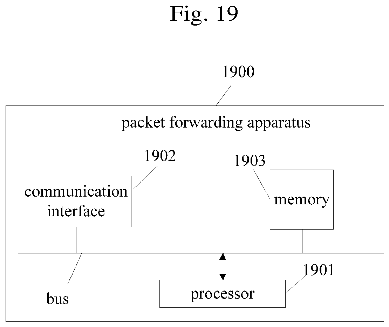

It is should be noted that Fig. 19 is a schematic view of a hardware entity of a packet forwarding apparatus according to an embodiment of the present disclosure. As shown in Fig. 19, the hardware entity of the packet forwarding apparatus 1900 includes a processor 1901, a communication interface 1902, and a memory 1903.

The processor 1901 commonly controls the overall operation of the apparatus 1900.

The communication interface 1902 may make the apparatus communicate with other terminals or servers through a network.

The memory 1903 is configured to store instructions and applications executable on the processor 1901, and cache data to be processed or been processed by the processor 1901 and various modules in the apparatus 1900 (for example, image data, audio data, voice communication data, and video communication data), and may be implemented by FLASH or Random Access Memory (RAM).

Obviously, it will be apparent to those skilled in the art that the various modules or steps of the above mentioned present disclosure may be implemented by general computing device. The various modules or steps may be centralized on a single computing device or distributed over a network of multiple computing devices. For example, the various modules or steps may be implemented with the executable program code of the computing device. Thus, the executable program code may be stored in storage devices and executed by computing devices, and in some cases, the steps shown or described may be performed in a different order, or they may be made into various integrated circuit modules; or multiple modules or steps thereof may be made into a single integrated circuit module. In this way, the present disclosure is not limited to any specific combination of hardware and software.

The foregoing descriptions are merely embodiments of the present disclosure, and are not limit the present disclosure hereto. There may be various modifications or variations to the present disclosure for those skilled in the technical art. Those modifications, replacements and improvements within the spirits and principles of the present disclosure are all fall within the protection scope of the present disclosure.

### Industrial availability

The embodiments provided in the present disclosure resolve the problem in the related technique that the existed multicast technique may not meet the requirements of the data centers due to their special network architectures and demands, and has disadvantages of having high complexity and difficult to manage, implement forwarding a BIER packet according to a SI of a cluster in which the destination apparatus resides and improve forwarding performance of the data center.

## Claims

1. A packet forwarding method comprising:
receiving a bit indexed explicit replication (BIER) packet sent by a source apparatus; and
forwarding the BIER packet to a destination apparatus according to a set identifier (SI) carried by a packet header of the BIER packet, wherein the SI indicates a cluster in which the destination apparatus resides.

2. The method according to claim 1, wherein before the step of receiving the BIER packet sent by the source apparatus, the method further comprises:
clustering converge apparatuses and access apparatuses of a data center, and allocating a SI to each cluster; and
determining BFR-ID value of each destination apparatus according to the allocated SI,
wherein the BFR-ID is carried in the packet header of the BIER packet, and the destination apparatus comprises: a converge apparatus and an access apparatus.

3. The method according to claim 2, wherein the BFR-ID value is determined according to at least one of the following ways:
receiving commands issued from a controller of the data center through a specified data model;
receiving commands issued from the controller through a path computation unit extension (PCE) protocol;
receiving commands issued from the controller through a border gateway protocol (BGP) extension;
receiving commands issued from the controller through a border gateway protocol-path state extension; and
receiving commands issued from the controller through an Openflow protocol extension.

4. The method according to claim 1, further comprising:
forwarding the BIER packet to the destination apparatus according to at least the SI of the cluster in which the destination apparatus resides, a virtual network identity, and BFR-ID.

5. The method according to claim 1, wherein a capability that an apparatus for forwarding between Leaves in a data center supports forwarding according to the SI or a capability that a converge apparatus in the data center supports forwarding according to the SI is reported to a controller.

6. A packet forwarding device comprising:
a receiving module configured to receive a bit indexed explicit replication (BIER) packet sent by a source apparatus; and
a forwarding module configured to forward the BIER packet to a destination apparatus according to a set identifier (SI) carried by a packet header of the BIER packet, wherein the SI indicates a cluster in which the destination apparatus resides.

7. The device according to claim 6, further comprising:
a processing module configured to cluster converge apparatuses and access apparatuses of a data center;
an allocating module configured to allocate a SI to each cluster;
a determining module configured to determine BFR-ID value of each destination apparatus according to the allocated SI,
wherein the BFR-ID is carried in the packet header of the BIER packet, and the destination apparatus comprises: a converge apparatus and an access apparatus.

8. The device according to claim 7, the determining module is further configured to determine the BFR-ID value according to at least one of the following ways:
receiving commands issued from a controller of the data center through a specified data model;
receiving commands issued from the controller through a path computation unit extension (PCE) protocol;
receiving commands issued from the controller through a border gateway protocol (BGP) extension;
receiving commands issued from the controller through a border gateway protocol-path state extension; and
receiving commands issued from the controller through an Openflow protocol extension.

9. The device according to claim 6, the forwarding module is further configured to forward the BIER packet to the destination apparatus according to at least the SI of the cluster in which the destination apparatus resides, a virtual network identity, and BFR-ID.

10. A storage medium storing programs which cause, when executed by a processor, the processor to perform the packet forwarding method according to any one of claims 1 to 5.

11. A packet forwarding apparatus comprising a memory and a processor, wherein the memory stores computer programs executable on the processor, which cause, when executed by the processor, the processor to perform the packet forwarding method according to any one of claims 1 to 5.
